# EUROPÄISCHE PATENTSCHRIFT

(11) **EP 4 261 112 B1**
(45) Veröffentlichungstag und Bekanntmachung des Hinweises auf die Patenterteilung: **16.10.2024**
(21) Anmeldenummer: 23166500.1
(22) Anmeldetag: 04.04.2023
(51) Int. Cl.: B62D 61/06, B62D 21/11

(54) **ACHSTRÄGER-STRUKTUR, VERWENDUNG EINER SOLCHEN ACHSTRÄGER-STRUKTUR UND VERFAHREN ZUR HERSTELLUNG DAFÜR**
AXLE SUPPORT STRUCTURE, USE OF SUCH AN AXLE SUPPORT STRUCTURE AND CORRESPONDING PRODUCTION METHOD
STRUCTURE DE SUPPORT D'ESSIEU, UTILISATION D'UN TEL SUPPORT D'ESSIEU ET PROCÉDÉ DE SA FABRICATION

(30) Priorität: 12.04.2022 DE 202022101976 U; 19.12.2022 DE 102022133813
(43) Veröffentlichungstag der Anmeldung: 18.10.2023
(73) Patentinhaber: HEADS GmbH & Co KG, 61348 Bad Homburg (DE)
(72) Erfinder: Görtz, Holger, 61348 Bad Homburg (DE)
(74) Vertreter: 2K Patentanwälte Blasberg Kewitz & Reichel

(56) Entgegenhaltungen:
- EP-A2- 2 899 103
- DE-A1- 102009 010 974

## Beschreibung

Die Erfindung betrifft eine Achsträger-Struktur für ein Fahrzeug, insbesondere eine Achsträger-Struktur, die eine Querstrebe und zwei Achsträger aufweist, die jeweils an einem der beiden Enden der Querstrebe befestigt sind.

Außerdem betrifft die Erfindung Verfahren zur Herstellung einer solchen Achsträger-Struktur sowie eine Montage-Verfahren zum Einbau derselben in ein Fahrzeug (zwecks Umbau zu einem Fahrzeug mit Doppelrad-Hinterachse.

Aus der EP 2 899 103 B1 ist eine Achsträger-Struktur bekannt, die zum Umbau eines ursprünglich vierrädrigen Fahrzeugs geeignet ist, um dieses Fahrzeug mit einer geänderten Hinterachskonstruktion auszustatten, welche zwei in einem geringen Abstand montierte Räder aufweist, die somit ein Doppelrad bilden. Hierdurch wird das Fahrzeug zu einem dreirädrigen Fahrzeug umgebaut, welches für die Führerscheinklasse A1 zugelassen werden kann, wodurch auch junge Führerscheininhaber ab 16 Jahren dieses Fahrzeug führen dürfen. Die dort offenbarte Achsträger-Struktur weist u.a. zwei massive Achsträger auf, die an einer rahmenartigen Querstrebenkonstruktion befestigt sind, wobei die zwei Achsträger jeweils einen Flansch für ein Radlager zur Montage eines Rades aufweisen, und die zwei Flansche gegenüberliegend zu einander angeordnet sind, so dass zwischen den Achsträgern die beiden Räder bzw. das Doppelrad drehlagernd montierbar ist.

Jedoch ist aufgrund der massiv gestaltetem Achsträger und der rahmenförmigen Querträger die dortige Achsträger-Struktur recht schwer und sperrig aufgebaut. Daher müssen zum Einbau dieser Achsträger-Struktur die Radkästen zur Fahrzeugmitte hin erweitert bzw. verbreitert werden und zudem müssen Versteifungsträger zur Stabilisierung der Fahrzeugkaroserie vorgesehen werden (s. dortigen Anspruch 1).

In DE 35 26 272 A1 wird ein Achsträger offenbart, der als geschweißter Blechkasten ausgebildet ist.

In DE 10 2009 010 974 A1 wird eine Tragrahmenstruktur eines Fahrzeugs offenbart, insbesondere ein Achsträger, der im Wesentlichen aus zwei sog. Längs-Trägern und zwei diese gegeneinander abstützenden sog. Quer-Trägern besteht, welche jeweils als Hohlprofile ausgebildet sind, die aus zumindest zwei zusammengesetzten Formteilen bestehen, wobei aus einer zunächst ebenen und geeignet beschnittenen Blechstruktur durch Biegeumformen eine sog. Oberschale der Tragrahmenstruktur mit dann noch offenen Längsträgern und Querträgern geformt ist, welche jeweils durch verschweißte Schließbleche als zweite oder weitere Formteile zu einem Hohlprofil vervollständigt sind.

In DE 10 2007 030 929 A1 wird ein Achsträger offenbart, der aus zwei Querträgern und zwei Längsträgern besteht, wobei einer der Querträger (der hintere) durch zwei miteinander verschweißte Blechschalen realisiert ist.

Und DE 10 2014 204 052 A1 offenbart eine Versteifungsstruktur eines zweispurigen Fahrzeugs in Form eines als Blechformstück ausgebildeten Schubfelds, welches an einem als Achsträger fungierenden Hilfsrahmen und optional an Längsträgern des Fahrzeugs befestigt ist und weiterhin an seitlichen Schwellern des Fahrzeug-Aufbaus abgestützt ist, wobei diese Abstützung über im Blechformstück ausgeformte Stützarme vorgesehen ist.

Aufgabe der vorliegenden Erfindung ist es, die obigen Nachteile zu überwinden und insbesondere eine Achsträger-Struktur vorzuschlagen, die relativ leicht und kompakt ist, wobei darauf verzichtet werden kann, die Radkästen zur Fahrzeugmitte hin erweitern zu müssen sowie Versteifungsträger zur Stabilisierung der Fahrzeugkaroserie vorsehen zu müssen.

Gelöst wird die Aufgabe durch eine Achsträger-Struktur mit den Merkmalen des Anspruchs 1.

Die Erfindung ist dadurch gekennzeichnet, dass die Achsträger-Struktur eine Querstrebenkonstruktion auf, die aus einer als Drehstab wirkenden Querstrebe besteht, an deren beiden Enden jeweils ein Achsträger befestigt ist; und dass die zwei Achsträger jeweils aus einem Satz mehrerer, flacher Blechteile, die abschnittsweise abgekantet und/oder zusammengeschweißt zu einem dreidimensionalen Gebilde zusammengebaut sind.

Hierdurch ergibt sich eine deutlich leichtere, weil nicht massive, Konstruktion von Achsträgern und zudem ergibt sich, auch wegen der einen als Drehstab wirkenden Querstrebe, eine sehr kompakte Bauweise (keine Verbreiterung der Radkästen erforderlich), wobei trotz der leichten Konstruktion die Ansprüche an Stabilität voll erfüllt werden. Außerdem verbessert der Drehstab deutlich das Fahrverhalten des Fahrzeuges.

Des Weiteren umfasst die Erfindung noch die Verwendung einer solchen Achsträger-Struktur in einem Kraftfahrzeug, insbesondere zum Zweck des Umbaus von einem vierrädigen in ein dreirädriges Fahrzeug.

Schließlich umfasst die Erfindung auch ein Verfahren zur Herstellung einer Achsträger-Struktur mit Hilfe von zwei derart angefertigten Achsträgern.

Vorteilhafte Ausgestaltungen der Erfindung ergeben sich aus den Unteransprüchen.

Demnach umfasst jeder Satz vorzugsweise mindestens zwei flache Blechteile, die jeweils mindestens drei Abschnitte aufweisen, die in Winkeln zwischen 35° bis 90° zueinander abgekantet sind, wobei jedes dieser Blechteile jeweils zumindest zwei Aussparungen aufweist. Ein solcher Satz von Blechteilen ist geeignet zum leichten und stabilen Aufbau eines Achsträgers und einer damit aufgebauten Achsträger-Struktur. Im Vergleich zu massiven Achsträgern wird durch die Verwendung von Blech, wie z.B. Stahlblech oder Schwarzblech, deutlich an Gewicht gespart; zudem reduzieren die vorgesehen Aussparungen auch noch das Gewicht. Das abschnittsweise Abkanten im Winkel-Bereich von 35° bis 90° ermöglicht eine kompakte und sehr stabile Konstruktion und schließlich eine dreidimensionale Achsträger-Struktur, die deutlich leichter und kompakter als die bekannten Strukturen ist.

Vorzugsweise weisen zwei der flachen Blechteile jeweils eine Öffnung auf, in die ein Ende der Querstrebe einführbar bzw. eingeführt ist. Dies erleichtert erheblich den Zusammenbau und das exakte Ausrichten der Struktur, insbesondere vor dem Zusammenschweißen. Vorzugsweise ist die Querstrebe als ein T-förmiger Drehstab ausgebildet und die jeweilige Öffnung ist als T-förmiger Schlitz ausgebildet; hierdurch können die Teile bereits vor dem Zusammenschweißen formschlüssig miteinander verbunden werden.

In weiteren vorteilhaften Ausführungen umfasst jeder Satz mindestens zwei flache Blechteile, die nicht abgekantet sind, wobei zumindest eines dieser Blechteile eine Aussparung und/oder einen Ausschnitt aufweist. Damit werden möglichst alle Bauteile mit Material-Aussparungen und/oder -Ausschnitte versehen.

Die Erfindung wird nachfolgend im Detail anhand von Ausführungsbeispielen beschrieben, wobei auf die beiliegenden Zeichnungen Bezug genommen wird, die folgende schematische Darstellungen wiedergeben:
- Fig. 1a: zeigt in einer dreidimensionalen Darstellung den Aufbau einer Achsträger-Struktur nach einem ersten Ausführungsbeispiel;
- Fig. 1b: zeigt in einer Draufsicht den Aufbau der Achsträger-Struktur nach dem ersten Ausführungsbeispiel;
- Fig. 1c: zeigt in einer dreidimensionalen Darstellung den Aufbau eines der beiden Achsträger der Achsträger-Struktur nach dem ersten Ausführungsbeispiel;
- Fig. 2a: zeigt in einer dreidimensionalen Darstellung den Aufbau einer Achsträger-Struktur nach einem zweiten Ausführungsbeispiel;
- Fig. 2b: zeigt in einer Draufsicht den Aufbau der Achsträger-Struktur nach dem zweiten Ausführungsbeispiel;
- Fig. 2c: zeigt in einer Draufsicht als Abwicklungsschema den Satz flacher Blechteile zum Aufbau der Achsträger-Struktur nach dem zweiten Ausführungsbeispiel;
- Fig. 3a: zeigt in einer dreidimensionalen Darstellung von oben den Aufbau einer Achsträger-Struktur nach einem dritten Ausführungsbeispiel;
- Fig. 3b: zeigt in einer dreidimensionalen Darstellung von unten den Aufbau der Achsträger-Struktur nach einem dritten Ausführungsbeispiel;
- Fig. 3c: zeigt in einer Draufsicht den Aufbau der Achsträger-Struktur nach dem dritten Ausführungsbeispiel;
- Fig. 3d: zeigt in einer Seitenansicht den Aufbau eines der Achsträger der Achsträger-Struktur nach dem dritten Ausführungsbeispiel;
- Fig. 4a: ist ein Ablaufdiagramm zur Veranschaulichung der Herstellung eines (einzelnen) Achsträgers und betrifft nicht die Erfindung an sich sondern ist rein informativ zu verstehen; und
- Fig. 4b: ist ein Ablaufdiagramm zur Veranschaulichung eines Verfahrens zur Herstellung einer Achsträger-Struktur umfassend zwei Achsträger und einen Querträger.

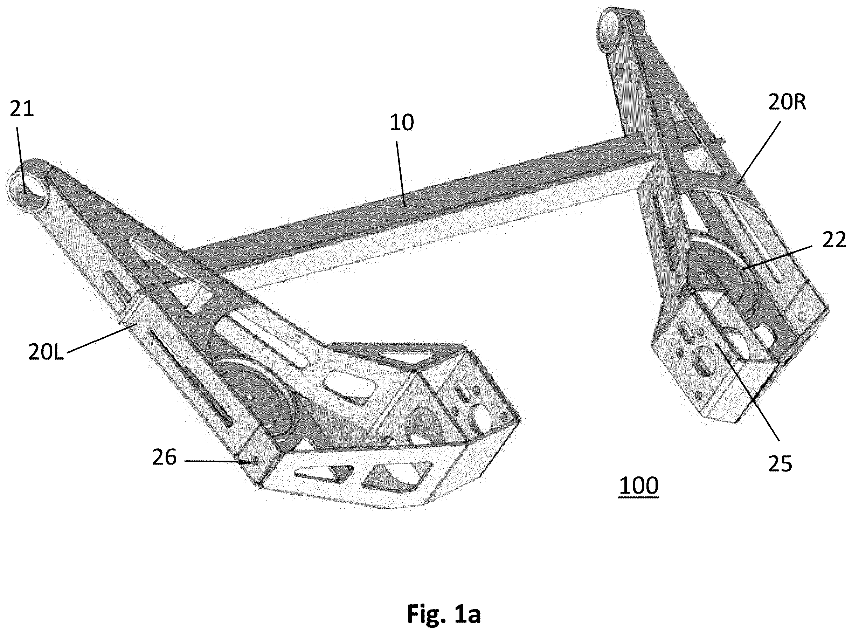

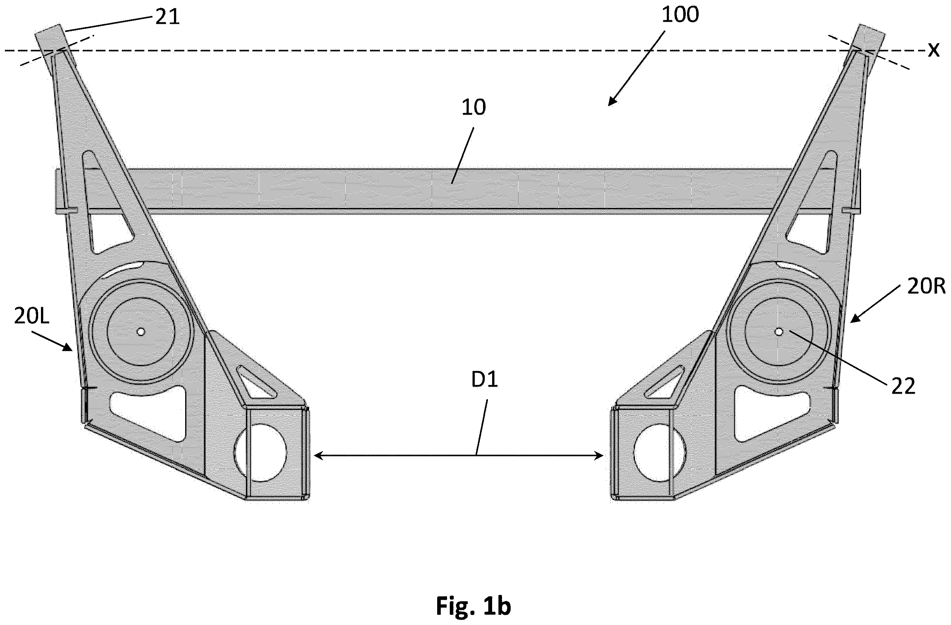

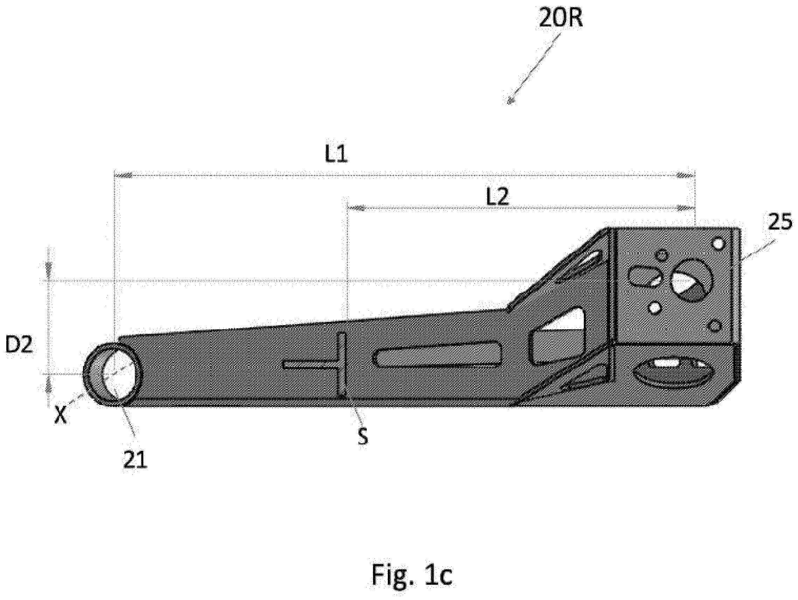

Zunächst wird auf die Figuren 1a und 1b Bezug genommen: Es wird eine Achsträger-Struktur 100 in einer ersten Ausführungsform gezeigt, die den Einsatz derselben als Hinterachsträgerstruktur betrifft. Die Achsträger-Struktur 100 weist einen Querträger bzw. eine Querststrebe 10 auf, an welcher zwei Achsträger befestigt sind, und zwar der linke Achsträger 20L und der rechte Achsträger 20R. Dabei befindet sich jeweils einer der Achsträger an einem Ende der Querstrebe, wobei die jeweilige Verbindung zwischen Achsträger und Querstrebe sich in etwa bei einem Drittel der Länge des Achsträgers befindet (s. auch Fig. 1c). Jeder Achsträger 20L und 20R weist in einem Ende eine Aufnahme 21 für ein Achsgummi auf, über welches der jeweilige Achsträger mit der Karosserie des Fahrzeugs schwenkbar verbunden ist (nicht dargestellt). Die Achsträger 20L und 20R sind also schwenkbar gegenüber der Karosserie gelagert (Drehachsen-Lagerung mit Schwenkachse X - siehe Fig. 1b). Da die Querstrebe eine gewisse Flexibilität aufweist und insbesondere als Drehstab wirkt, können die Achsträger 20L und 20R auch etwas gegeneinander verschwenkt werden; dies verbessert insbesondere die dynamische Fahreigenschaften eines mit der Achsträger-Struktur ausgestatteten Fahrzeugs. Zur Federung der Konstruktion weist jeder Achsträger eine Stützfläche 22 für eine Spiralfeder (nicht gezeigt) auf, d.h. einen sog. Federteller. Zur Dämpfung der schwenkbaren Konstruktion weist jeder Achsträger noch eine Befestigung für einen Stoßdämpfer (nicht gezeigt) auf. Damit können die Achsträger 20L und 20R federgedämpft mittels der Drehachsen-Lagerung an der jeweiligen Aufnahme 21 verschwenkt werden. Durch die als Drehstab wirkende Querstrebe 10 sind, wie zuvor gesagt, auch die beiden Achsträger gegeneinander/gegensinnig verschwenkt, wobei die Querstrebe die Rückstellkraft liefert.

Die Achsträger 20L und 20R sind jeweils mit einem Flansch 26 für ein Radlager ausgestattet, wobei diese zur Mitte der Struktur hin ausgerichtet sind, d.h. dass die zwei Flansche 25 gegenüberliegend zueinander angeordnet sind, so dass zwischen den Achsträgern 20L und 20R zwei Räder, die ein Doppelrad bilden, drehlagernd montierbar sind (die Räder sind nicht eingezeichnet). Unter einem Doppelrad wird insbesondere ein Satz von zwei parallel zueinander angeordneten Rädern verstanden, bei denen der Abstand zwischen den Mittelpunkten der Aufstandsflächen der Räder bzw. Reifen auf der Fahrbahn kleiner als 460 mm ist.

Die Achsträger-Struktur ist sehr kompakt gestaltet und weist folgende Abmessungen auf (siehe insbesondere Fig. 1b und 1c):
Der Abstand D1 zwischen den beiden Flanschen 25 beträgt hier z.B. 400 mm, er sollte möglichst im Bereich von 300-500 mm liegen.

Die Länge L1, d.h. der Abstand von Aufnahme 21 (Lochmitte) bis zum Flansch 25 (Lochmitte), beträgt hier z.B. 556 mm, er sollte möglichst im Bereich von 450-600 mm liegen.

Die Länge L2, d.h. der Abstand von Befestigungsstelle (Öffnung/Schlitz S) zur Querstrebe 10 bis zum Flansch 25 (Lochmitte), beträgt hier z.B. 333 mm, er sollte möglichst im Bereich von 250-400 mm liegen. Somit befindet sich die Befestigungsstelle (Öffnung/Schlitz S) bei etwa einem Drittel der Länge L1.

Die Querstrebe 10 ist hier als T-Träger mit den Maßen 60x60x7 mm ausgebildet und fungiert somit auch als Drehstab, der eine federelastische Verschränkung der Achsträger erlaubt und somit der Gesamtkonstruktion eine Flexibilität gibt, die das, insbesondere dynamische, Fahrverhalten des Fahrzeuges deutlich verbessert.

Der Abstand D2 beträgt hier z.B. 90 mm (er kann zwischen 60-110 mm betragen) und bezieht sich auf den Versatz zwischen der Position der Aufnahme 21 für das Achsgummi und der Position des Flansches 25 (Lochmitte) für die Aufnahme des Radlagers. Somit wird in Relation zur Schwenkachse X das am Flansch 25 montierte Radlager etwas angehoben, d.h. das montierte Rad liegt höher in der Karosserie des Fahrzeugs, was wiederum die Fahrstabilität erhöht.

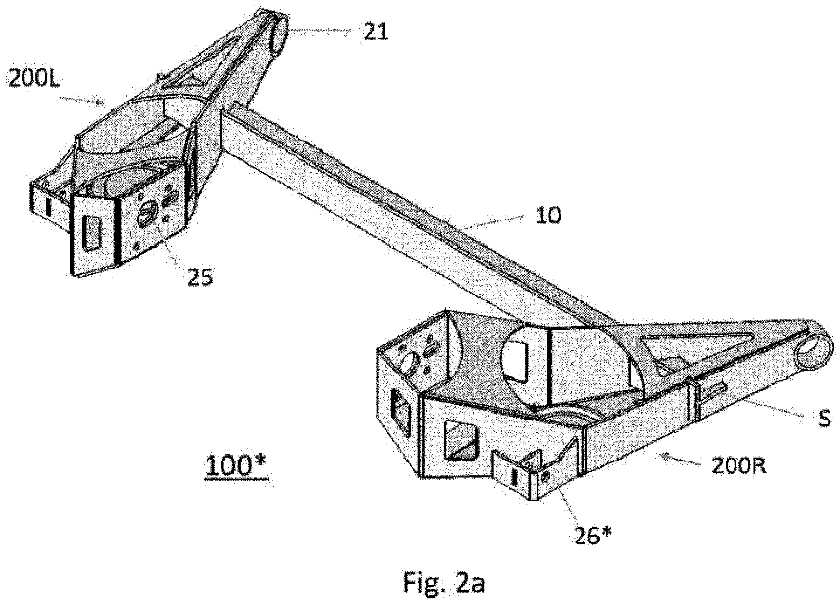

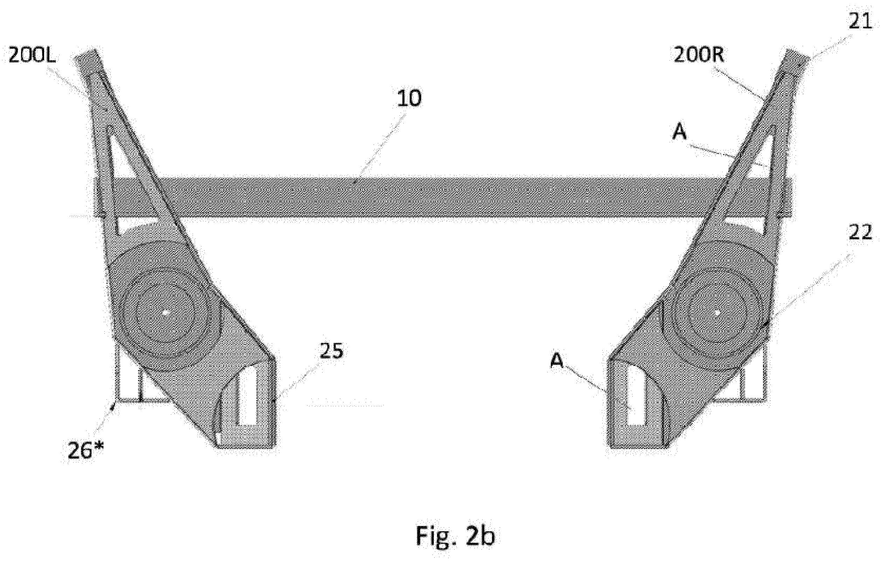

Der Aufbau der Achsträger-Struktur und insbesondere die Konstruktion des jeweiligen Achsträgers wird nun noch weiter im Detail anhand eines zweiten Ausführungsbeispiels und unter Bezugnahme auf die Figuren 2a-c beschrieben:
Die zweite Ausführungsform der Achsträger-Struktur 100* ist ähnlich dem ersten Ausführungsbeispiel aufgebaut. Auch die zweite Ausführungsform hat einen als Drehstab wirkenden Querträger 10, an dem zwei Achsträger angeordnet sind, nämlich ein linker Achsträger 200L und ein rechter Achsträger 200R; ebenso sind Aufnahmen 21 für Achsgummis sowie Flansche 25 für Radlager vorgesehen. Was die Konstruktion der Achsträger angeht, so unterscheidet sich diese durch eine abgewandelte Weise der Befestigung 26* für die Stoßdämpfer. Ansonsten sind die beiden Ausführungsformen im Wesentlichen gleich.

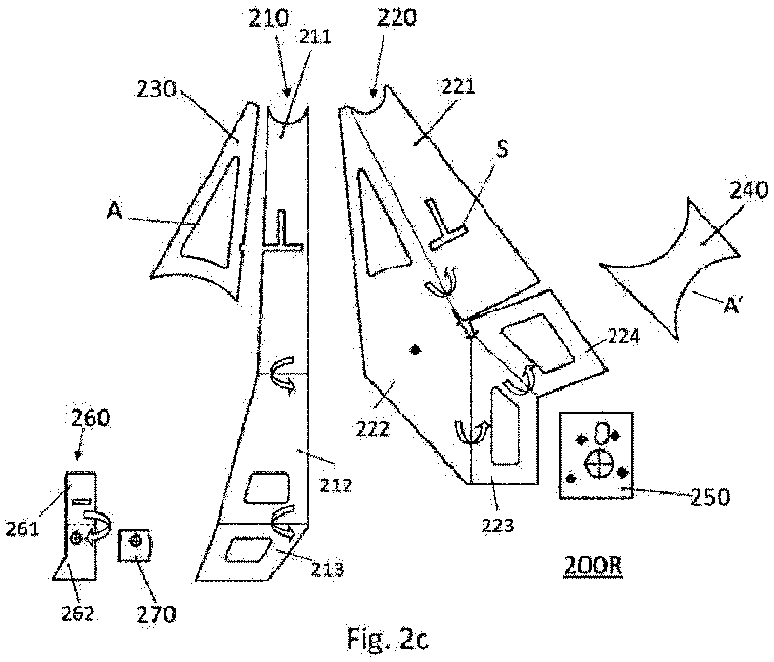

Wie bereits an den Figuren 1a, 1c und 2a zu erkennen ist, besteht der jeweilige Achsträger aus mehreren flachen Blechteilen, die zu einem dreidimensionalen Gebilde zusammengesetzt sind. Der Aufbau des jeweiligen Achsträgers wird nachfolgend im Detail anhand der Figuren 2a und 2c am Beispiel des rechten Achsträgers 200R beschrieben:
Wie dort zu sehen ist, besteht der Achsträger 200R aus einem Satz mehrerer flacher Blechteile, hier z.B. auch Stahlblech der Stärke 5 mm. Es werden hier sieben Blechteile 210, 220, 230, 240, 250, 260 und 270 verwendet, die aus dem Stahlblech mittels Wasserstrahl oder Laser herausgeschnitten wurden.

In der Figur 2c sind die Konturen der Blechteile in Gestalt eines Abwicklungsschemas dargestellt. Viele der größeren Blechteile, wie z.B. 210, 220 und 230 weisen (lochartige) Aussparungen A auf, um somit Materialgewicht einzusparen, ohne die Stabilität zu verringern. Auch kleinere Blechteile, wie z.B. 240 sind material- und gewichtssparend gestaltet, indem an ihnen Ausschnitte A' (nicht-lochartige Aussparungen) vorgesehen sind.

Im dargestellten Beispiel ist ein erstes Blechteil 210 mit drei Abschnitten 211, 212 und 213 versehen, die gegeneinander gekantet werden, um zu einer mehrdimensionalen Struktur zu kommen. Dasselbe gilt für ein zweites Blechteil 220, welches sogar vier Abschnitte 221, 222, 223 und 224 aufweist. Die in der Fig. 2c dargestellten Pfeilsymbole sollen anzeigen, wie der jeweilige Abschnitt abgekantet wird. Die Pfeilspitze bezieht sich auf den jeweils abzukantenden Abschnitt; und die Orientierung des Pfeils (im oder gegen den Uhrzeigersinn) zeigt an, ob dieser Abschnitt aus der Ebene heraus nach oben (Pfeil gegen den Uhrzeigersinn) oder nach unten (Pfeil im Uhrzeigersinn) abgekantet wird. So wird z.B. der Abschnitt 224 gegenüber dem Abschnitt 223 nach oben abgekantet, letzterer wiederum wird gegen den Abschnitt 222 ebenfalls nach oben. Hingegen wird der Abschnitt 262 gegen den Abschnitt 261 nach unten hin abgekantet. Die beim Abkanten einzuhaltenden Winkel (Knickwinkel) liegen im Bereich vom 35° bis 90°. Im vorliegenden Beispiel sind folgende Winkel einzuhalten, wobei ein Biegeradius von R 2,5 bevorzugt wird:

| Benachbarten Abschnitte | Winkel (Knickwinkel) |
|---|---|
| 224 zu 223 | 90° nach oben |
| 223 zu 222 | 36,9° nach oben |
| 221 zu 222 | 90° nach oben |
| 213 zu 212 | 46,7° nach oben |
| 212 zu 211 | 37,7° nach oben |
| 262 zu 261 | 90° nach unten |

Mit diesen hier angegebenen Winkeln lassen sich die betroffenen Bauteile 210, 220 und 260 zu mehrdimensionalen Teil-Gebilden formen, die wiederum Bauteile für den Achsträger 200R darstellen. Zusammen mit den flachen nicht-abgekanteten Blechteilen 230, 240, 250 und 270 wird dann durch Verschweißen jeweils der dreidimensionale Achsträger 200R gebaut. Wie eine Zusammenschau der Figuren 2a bis 2c veranschaulicht, entsteht schließlich ein leichter aber sehr stabiler Achsträger 200R.

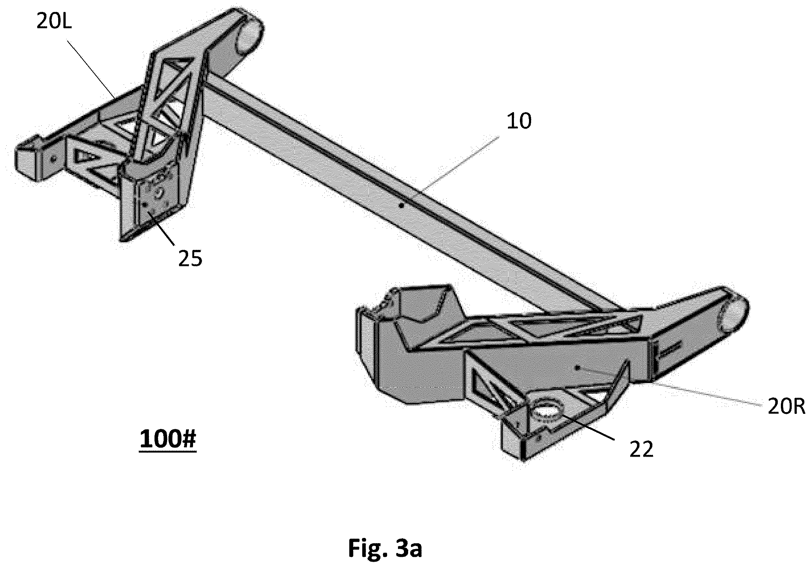

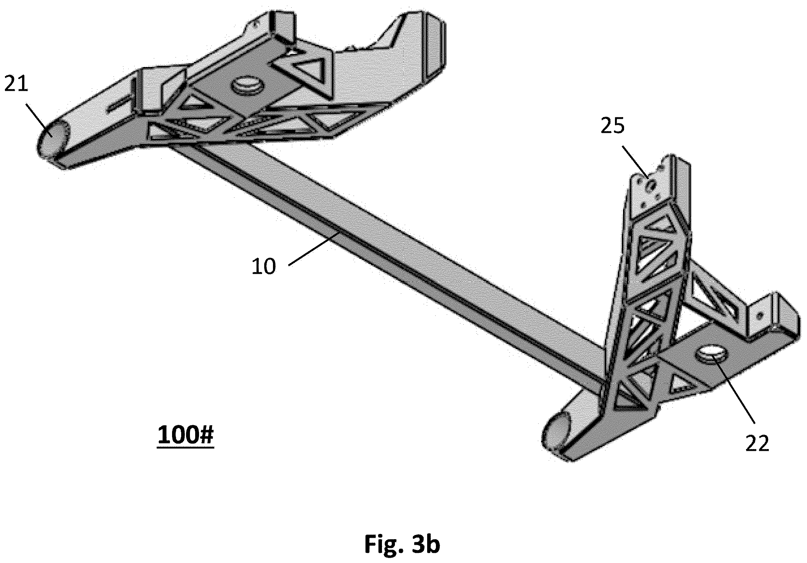

Anhand der Fig. 3a-d wird ein drittes Ausführungsbeispiel beschrieben. Die dort gezeigte Achsträger-Struktur 100# besteht ebenfalls im Wesentlichen aus zwei Achsträgern 20L und 20R, die jeweils aus einzelnen Stahlblech- oder Schwarzblechteilen zusammengebaut worden sind (vergl. Beschreibung der Fig. 2c) und einem Querträger bzw. einer Querstrebe 10, welche als ein T-förmiger Drehstab ausgebildet ist. Da alle Ausführungsbeispiele (siehe auch Fig. 1a-c und Fig. 2a-c) prinzipiell ähnlich sind, können dieselben Bezugszeichen entsprechend verwendet werden. Die Unterschiede der Ausführungsbeispiele liegt insbesondere in den Details (Dimensionen und Abmessungen) der verschiedenen Konstruktionen, welche jeweils für einen bestimmten Fahrzeugtyp optimiert sind. Die Konstruktion nach Fig. 3a-d ist z.B. für den Kleinwagen-Typ "VW Up" optimiert.

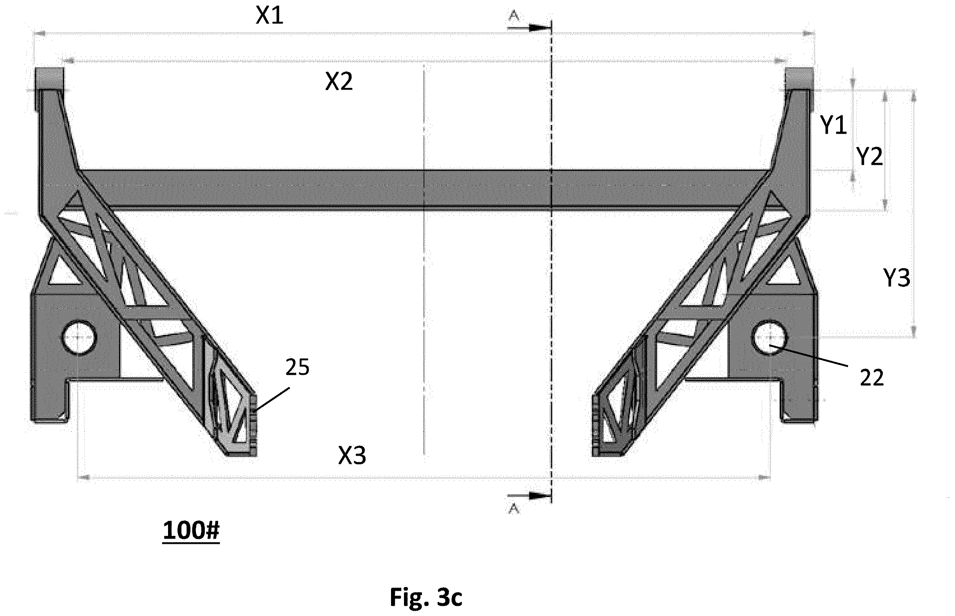

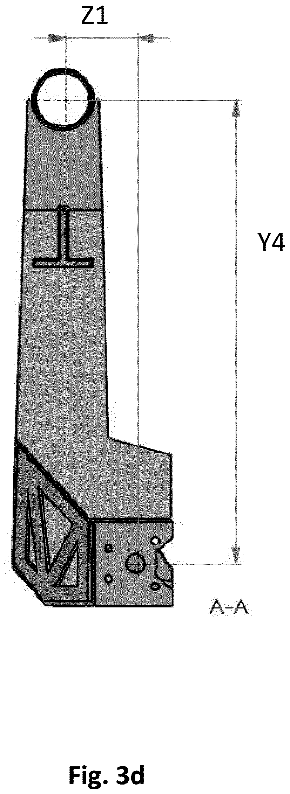

Die Fig. 3a-d zeigen das dritte Ausführungsbespiel in verschiedenen Ansichten. Der Schnitt A-A in Fig. 3c zeigt die seitliche Draufsicht auf den rechten Achsträger an, d.h. die Ansicht in Fig. 3d.

Aus den Fig. 3c-d sind Abmessungen der dortigen Konstruktion markiert; diese betragen folgende Werte: X1 = 1163 mm; X2 = 1066 mm; X3 =1020 mm; Y1 = 117,5 mm; Y2 = 177,5 mm; Y3 = 363,5 mm; Y4 = 492 mm und Z1 = 76,51 mm.

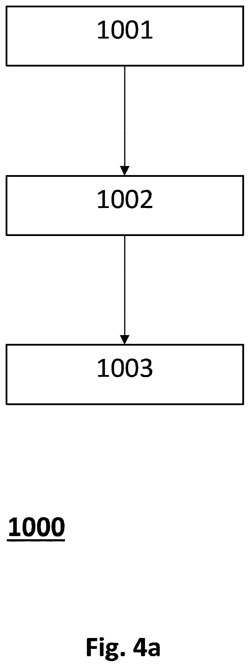

Der jeweilige Achsträger kann nach einem Verfahren 1000 gefertigt werden, das nicht Gegenstand der Erfindung ist, sondern hier rein informativ als schematisches Ablaufdiagramm in Fig. 4a dargestellt ist und folgende Schritte umfasst:
Schritt 1001: Ausschneiden eines Satzes 200 mehrerer flacher Blechteile 210 - 270 aus einem Blech, wobei der Satz 200 zumindest zwei Blechteile 210, 220 umfasst, die abgekantet werden und jeweils mindestens drei Abschnitte 211-213; 221-224 und eine Öffnung S aufweisen, und wobei der Satz 200 mindestens zwei flache Blechteile 230, 240 umfasst, die nicht abgekantet werden;
Schritt 1002: Abkanten der Abschnitte 211-213; 221-224 zueinander in Winkeln zwischen 35° bis 90°; und
Schritt 1003: Verschweißen der abgekanteten und nicht abgekanteten Blechteile 210-270 zu einem dreidimensionalen Gebilde für den gewünschten Achsträger (z.B. rechtsseitige oder linksseitige Ausführung).

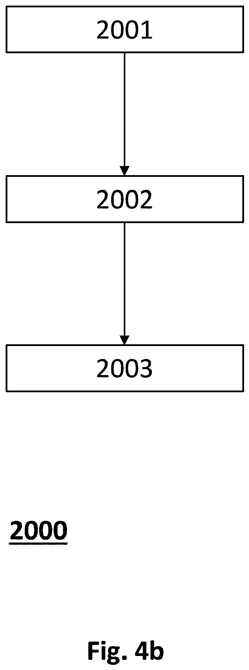

Der Zusammenbau einer Achsträger-Struktur gemäß der Erfindung kann nach dem Verfahren 2000 erfolgen, das das als schematisches Ablaufdiagramm in Fig. 4b dargestellt ist und folgende Schritte umfasst:
Schritte 2001 und 2002: Herstellen von jeweils einer der beiden Achsträger 200L, 200R gemäß dem obigen Verfahren 1000; dann
Schritt 2003: Befestigen der Achsträger 200L, 200R jeweils an einem der Enden eines Querträgers 10*.

Insgesamt werden der Aufbau einer Achsträger-Struktur und deren Herstellung offenbart, die die Realisierung eines dreirädrigen Fahrzeugs ermöglichen, wobei Achsträger-Struktur leicht, kompakt und dennoch stabil ist, dass bei deren Einbau in das Fahrzeug darauf verzichtet werden kann, die Radkästen zur Fahrzeugmitte hin zu erweitern sowie Versteifungsträger zur Stabilisierung der Fahrzeugkaroserie vorzusehen.

Was den Einbau der erfindungsgemäßen Achsträger-Struktur in ein handelsübliches Kraftfahrzeug angeht, so kann wie folgt vorgegangen werden:
∘ Zuerst wird die Original Achse ausgebaut;
∘ Dann wird eine Schablone in den Kofferraum gelegt; an dieser Schablone entlang wird die Reserveradmulde ausgeschnitten;
∘ Dabei bleiben die Träger vom und hinten und die beiden seitlichen Träger links und rechts unverändert vorhanden;
∘ Dann werden die Bremsen und Radlager von der alten Achse abgenommen und auf die neue Achse gebaut;
∘ Weil die Räder jetzt innen liegend montiert sind, werden die Bremsen seitenverkehrt eingebaut (die rechte nach links und die linke nach rechts);
∘ Die original ABS- und ESP-Sensoren finden weiterhin Verwendung;
∘ Allerdings sollten geänderte Bremsleitungen eingebaut werden (sie müssen etwas länger sein und eine andere Biegung haben);
∘ Es werden geänderte Handbremsseile eingesetzt, auch diese müssen etwas länger sein;
∘ Nun werden zwei Federn (hier werden nicht die originalen eingesetzt) mit einer anderen Federrate - sie sind deutlich härter - eingesetzt. Oben sind sie in der ursprünglichen Halterung geführt, unten in der neuen Achse;
∘ Die original Stoßdämpfer werden weiter verwendet;
∘ Dann wird die Hinterachse an den originalen Aufhängungspunkten unter Verwendung der originalen Achslager eingebaut;
∘ Eine neue Abdeckung aus Blech wird im Kofferraum montiert, sie ist z.B. genietet und mit Karosseriekleber verklebt;
∘ Die Reifen, die hinten eingesetzt werden, sind in der Dimension gleich denen, die serienmäßig verbaut werden und die Originalfelgen werden verwendet;
∘ Der Auspuff wird gekürzt und die Abgase werden mit einem Winkelstück vor der Achse abgeleitet;
∘ Die Leistung wird durch eine Umprogrammierung des Steuergerätes auf 15 KW begrenzt - zwecks Zulassung für die Führerscheinklasse A1;
∘ Das Gewicht des Fahrzeugs liegt unter 1000 kg.

Ergänzend zu den bereits oben ausgeführten Vorteilen der Erfindung sei hier noch folgendes erwähnt: Die Erfindung zeichnet sich gegenüber dem Stand der Technik auch dadurch aus, dass für den Einbau der neuen Achsträger-Struktur in ein Fahrzeug bzw. für den Fahrzeug-Umbau an den Radkästen selbst nichts verändert werden muss, insbesondere auch der vorhandene Raum nicht verbreitert werden und der Träger neben dem Radhaus kann unverändert bleiben. Gegenüber der bekannten eher steifen Konstruktion (siehe EP 2 899 103 B1) ergeben sich durch die Erfindung, dank der Querstrebenkonstruktion aus einer als Drehstab wirkenden Querstrebe, auch erhebliche Vorteile im Fahrverhalten des Fahrzeuges, da bei der Erfindung durch die Drehstabwirkung beide hinteren Räder auch bei extremen Situationen auf der Straße bleiben, d.h. den Kontakt zur Fahrbahnoberfläche behalten. Der Drehstab kann auch beim abgestellten Fahrzeug (Parksituation) Höhenunterschiede zwischen den Rädern ausgleichen, z.B. wenn das Fahrzeug im Bereich eines Bordsteins geparkt wird, wobei ein Rad sich auf dem Bordstein befindet und das andere auf der Fahrbahn; dies hat der Erfinder mit einem Prototypen getestet. Bei den in herkömmlicher Weise umgebauten Fahrzeuge ergibt sich das Problem, dass nur das obere Rad auf den Bordstein haftet während das untere nicht mehr die Fahrbahn berührt, sondern in der Luft hängt und somit das ganze Fahrzeug umzufallen droht. Somit verhindert die Erfindung effektiv auch die Wank- oder sogar Kippneigung eines Fahrzeuges.

### Bezugszeichenliste

- 100: Achsträger-Struktur (erste Ausführungsform)
- 10: Querstrebe (Drehstab)
- 20L, 20R: erster bzw. zweiter Achsträger
- 21: Aufnahme für Achsgummi (Drehpunkt-Lagerung)
- 22: Stützfläche (Federteller) für Spiralfeder
- 25: Flansch für Radlager
- 26: Befestigung Stoßdämpfer

- 100*: Achsträger-Struktur (zweite Ausführungsform)
- 10*: Querstrebe (Drehstab)
- 200L, 200R: erster bzw. zweiter Achsträger
- 210: erstes Teil mit drei Abschnitten 211, 212 und 213
- 220: zweites Teil mit vier Abschnitten 221, 222, 223 und 224
- 230: drittes Teil
- 240: viertes Teil
- 250: fünftes Teil (Flansch)
- 260: sechstes Teil mit Befestigung Stoßdämpfer
- 270: siebtes Teil (auch Befestigung Stoßdämpfer)

- 100#: Achsträger-Struktur (dritte Ausführungsform)

- 1000: Verfahren zur Herstellung eines Achsträgers mit den Schritten 1001-1003 (nicht Gegenstand der Erfindung, sondern nur rein informativ)

- 2000: Verfahren zur Herstellung einer Achsträger-Struktur mit den Schritten 2001-2003

## Patentansprüche

1. Achsträger-Struktur (100; 100*, 100#) für ein Fahrzeug, umfassend:
zwei Achsträger (20L, 20R), die an einer Querstrebenkonstruktion befestigt sind, wobei die zwei Achsträger (20L, 20R) jeweils einen Flansch (25) für ein Radlager zur Montage eines Rades aufweisen, und die zwei Flansche (25) gegenüberliegend zu einander angeordnet sind, so dass zwischen den Achsträgern (20L, 20R) zwei Räder, die ein Doppelrad bilden, drehlagernd montierbar sind,
**dadurch gekennzeichnet, dass**
die Querstrebenkonstruktion aus einer als Drehstab wirkenden Querstrebe (10) besteht, an deren beiden Enden jeweils einer der Achsträger (20L, 20R) befestigt ist, und dass die zwei Achsträger (20L, 20R) jeweils aus einem Satz (200) mehrerer, flacher Blechteile (210 - 270) bestehen, die abschnittsweise abgekantet und/oder zusammengeschweißt zu einem dreidimensionalen Gebilde zusammengebaut sind.

2. Achsträger-Struktur (100; 100*, 100#) nach Anspruch 1, **dadurch gekennzeichnet, dass** jeder Satz (200) mindestens zwei flache Blechteile (210, 220) umfasst, die jeweils mindestens drei Abschnitte (211-213; 221-224) aufweisen, die in Winkeln zwischen 35° bis 90° zueinander abgekantet sind, wobei jedes dieser Blechteile jeweils zumindest zwei Aussparungen (A) aufweist.

3. Achsträger-Struktur (100; 100*, 100#) nach Anspruch 2, **dadurch gekennzeichnet, dass** zwei der flachen Blechteile (210, 220) jeweils eine Öffnung (S) aufweisen, in die ein Ende der Querstrebe (10*) eingeführt ist.

4. Achsträger-Struktur (100; 100*, 100#) nach Anspruch 3, **dadurch gekennzeichnet, dass** die Querstrebe (10, 10*) als ein T-förmiger Drehstab ausgebildet ist und dass die jeweilige Öffnung (S) als T-förmiger Schlitz ausgebildet ist.

5. Achsträger-Struktur (100; 100*, 100#) nach einem der vorhergehenden Ansprüche, **dadurch gekennzeichnet, dass** jeder Satz (200) mindestens zwei flache Blechteile (230, 240) umfasst, die nicht abgekantet sind, wobei zumindest eines (230) dieser Blechteile eine Aussparung (A) und/oder einen Ausschnitt (A#) aufweist.

6. Achsträger-Struktur (100; 100*, 100#) nach einem der vorhergehenden Ansprüche, **dadurch gekennzeichnet, dass** der Abstand (D1) zwischen den beiden Flanschen (25) in einem Bereich von 300-500 mm liegt; und/oder
dass jeder Achsträger (20L, 20R) in einem Ende eine Aufnahme (21) für ein Achsgummi aufweist, über welches der jeweilige Achsträger mit der Karosserie des Fahrzeugs schwenkbar verbindbar ist und dass die Länge (L1), die den Abstand von der Aufnahme (21) bis zu dem Flansch (25) betrifft, in einem Bereich von 450-600 mm liegt, und/oder
dass die Länge (L2), die den Abstand von der Öffnung (S) der Querstrebe (10) bis zu dem Flansch (25) betrifft, in einem Bereich von 250-400 mm liegt; und/oder dass die Querstrebe (10) als ein T-Träger mit den Maßen 60x60x7 mm ausgebildet ist; und/oder
dass jeder Achsträger (20L, 20R) in einem Ende eine Aufnahme (21) für ein Achsgummi aufweist, über welches der jeweilige Achsträger mit der Karosserie des Fahrzeugs schwenkbar verbindbar ist und dass der Abstand (D2), der einen Versatz zwischen der Position der Aufnahme (21) für das Achsgummi und der Position des Flansches (25) betrifft, in einem Bereich von 60-110 mm liegt.

7. Verwendung einer Achsträger-Struktur (100; 100*; 100#) nach einem der vorhergehenden Ansprüche in einem Kraftfahrzeug.

8. Verfahren (2000) zur Herstellung einer Achsträger-Struktur (100; 100*, 100#) nach einem der Ansprüche 1-6, **gekennzeichnet durch** folgende Schritte:
(2001): Herstellen eines ersten Achsträgers (20R; 200R) als rechtsseitigen Achsträger (20R; 200R) der Achsträger-Struktur (100; 100*, 100#);
(2001): Herstellen eines zweiten Achsträgers (20L; 200L) als linksseitigen Achsträger (20L; 200L) der Achsträger-Struktur (100; 100*, 100#); und
(2003): Befestigen der beiden Achsträger (20R, 200R; 20L, 200L) jeweils an einem der Enden eines Querträgers (10*),
wobei das Herstellen der Achsträger (20R; 200R; 20L; 200L) jeweils nach einem Verfahren (1000) zur Herstellung eines einzelnen Achsträgers mit folgenden Schritte durchgeführt wird:
(1001): Ausschneiden eines Satzes (200) mehrerer flacher Blechteile (210 - 270) aus einem Blech, wobei der Satz (200) zumindest zwei Blechteile (210, 220) umfasst, die abgekantet werden und jeweils mindestens drei Abschnitte (211-213; 221-224) und eine Öffnung (S) aufweisen, und wobei der Satz (200) mindestens zwei flache Blechteile (230, 240) umfasst, die nicht abgekantet werden;
(1002): Abkanten der Abschnitte (211-213; 221-224) zueinander in Winkeln zwischen 35° bis 90°; und
(1003): Verschweißen der abgekanteten und nicht abgekanteten Blechteile (210-270) zu einem dreidimensionalen, als Achsträger (200R) gestaltetes Gebilde.

## Claims

1. An axle support structure (100; 100*, 100#) for a vehicle, comprising:
two axle supports (20L, 20R) fixed to a cross strut structure, wherein the two axle supports (20L, 20R) each have a flange (25) for a wheel bearing for mounting a wheel, and the two flanges (25) are arranged opposite to each other so that two wheels forming a double wheel can rotatably be mounted between the axle supports (20L, 20R),
**characterized in that**
the cross strut construction consists of a cross strut (10) which acts as a torsion bar and **in that** to each of their two ends one of the axle structures(20L, 20R) is mounted, and **in that** the two axle structures(20L, 20R) each consist of a set (200) of a plurality of flat sheet metal parts (210 - 270) which are bent in sections and/or welded together to form a three-dimensional structure.

2. Axle support structure (100; 100*, 100#) according to claim 1, **characterized in that** each set (200) comprises at least two flat sheet metal parts (210, 220) which each have at least three sections (211-213; 221-224) which are bent at angles of between 35° and 90° to one another, each of these sheet metal parts having at least two recesses (A).

3. Axle support structure (100; 100*, 100#) according to claim 2, **characterized in that** two of the flat sheet metal parts (210, 220) each have an opening (S) into which one end of the cross strut (10*) is inserted.

4. Axle support structure (100; 100*, 100#) according to claim 3, **characterized in that** the cross strut (10, 10*) is designed as a T-shaped torsion bar and that the respective opening (S) is designed as a T-shaped slot.

5. Axle structure structure (100; 100*, 100#) according to one of the preceding claims, **characterized in that** each set (200) comprises at least two flat sheet metal parts (230, 240) which are not folded, at least one (230) of these sheet metal parts having a recess (A) and/or a cutout (A#).

6. Axle structure structure (100; 100*, 100#) according to one of the preceding claims, **characterized in that** the distance (D1) between the two flanges (25) is in a range of 300-500 mm; and/or
**in that** each axle structure (20L, 20R) has in one end a receptacle (21) for an axle rubber, via which the respective axle structure can be pivotably connected to the body of the vehicle, and **in that** the length (L1), which relates to the distance from the receptacle (21) to the flange (25), is in a range of 450-600 mm, and/or
**in that** each axle structure (20L, 20R) has at one end a receptacle (21) for an axle rubber, via which the respective axle structure can be pivotably connected to the body of the vehicle, and **in that** the length (L2), which relates to the distance from the opening (S) of the cross strut (10) to the flange (25), is in a range of 250-400 mm; and/or
**in that** the cross strut (10) is designed as a T-beam with the dimensions 60x60x7 mm; and/or
**in that** the distance (D2), which relates to an offset between the position of the receptacle (21) for the axle rubber and the position of the flange (25), is in a range of 60-110 mm.

7. Use of an axle structure structure (100; 100*; 100#) according to one of the preceding claims in a motor vehicle.

8. Method (2000) for manufacturing an axle support structure (100; 100*, 100#) according to any one of claims 1-6, **characterized by** the following steps:
(2001): Manufacturing of a first axle support (20R; 200R) as a right-sided axle support (20R; 200R) of the axle support structure (100; 100*, 100#);
(2001): Manufacturing a second axle support (20L; 200L) as the left-side axle support (20L; 200L) of the axle support structure (100; 100*, 100#); and
(2003): Attaching the two axle structures(20R, 200R; 20L, 200L) each to one of the ends of a cross member (10*),
wherein the manufacturing of the axle structures(20R; 200R; 20L; 200L) is carried out in each case according to a method (1000) for manufacturing a single axle structure comprising the following steps:
(1001): Cutting out a set (200) of a plurality of flat sheet metal parts (210-270) from a sheet metal, wherein the set (200) comprises at least two sheet metal parts (210, 220) which are folded and each have at least three sections (211-213; 221-224) and an opening (S), and wherein the set (200) comprises at least two flat sheet metal parts (230, 240) which are not folded;
(1002): Folding the sections (211-213; 221-224) to each other at angles between 35° and 90°; and
(1003): Welding of the folded and unfolded sheet metal parts (210-270) to form a three-dimensional structure designed as an axle support (200R).

## Revendications

1. Structure de support d'essieu (100; 100*, 100#) pour un véhicule, comprenant:
deux supports d'essieu (20L, 20R) fixés à une construction de traverse, dans laquelle les deux supports d'essieu (20L, 20R) ont chacun une bride (25) pour un roulement de roue pour le montage d'une roue, et les deux brides (25) sont disposées à l'opposé l'une de l'autre de sorte que deux roues formant une roue double peuvent être montées de manière rotative entre les supports d'essieu (20L, 20R),
**caractérisé par le fait que**
la construction de la traverse consiste en une traverse (10) qui agit comme une barre de torsion et en ce que chacune de ses deux extrémités est montée sur l'une des structures d'essieu (20L, 20R), et en ce que les deux structures d'essieu (20L, 20R) consistent chacune en un ensemble (200) de plusieurs pièces de tôle plate (210 - 270) qui sont pliées en sections et/ou soudées pour former une structure tridimensionnelle.

2. Structure de support d'essieu (100; 100*, 100#) selon la revendication 1, **caractérisée en ce que** chaque ensemble (200) comprend au moins deux pièces de tôle plates (210, 220) qui ont chacune au moins trois sections (211-213; 221-224) qui sont pliées à des angles compris entre 35° et 90° l'une par rapport à l'autre, chacune de ces pièces de tôle ayant au moins deux évidements (A).

3. Structure de support d'essieu (100; 100*, 100#) selon la revendication 2, **caractérisée en ce que** deux des pièces de tôle plate (210, 220) présentent chacune une ouverture (S) dans laquelle est insérée une extrémité de l'entretoise transversale (10*).

4. Structure de support d'essieu (100; 100*, 100#) selon la revendication 3, **caractérisée par le fait que** la traverse (10, 10*) est conçue comme une barre de torsion en forme de T et que l'ouverture respective (S) est conçue comme une fente en forme de T.

5. Structure d'essieu (100; 100*, 100#) selon l'une des revendications précédentes, **caractérisée en ce que** chaque ensemble (200) comprend au moins deux pièces de tôle plates (230, 240) non pliées, au moins une (230) de ces pièces de tôle présentant un creux (A) et/ou une découpe (A#).

6. Structure d'essieu (100; 100*, 100#) selon l'une des revendications précédentes, **caractérisée par le fait que** la distance (D1) entre les deux brides (25) est comprise entre 300 et 500 mm; et/ou
en ce que chaque structure d'essieu (20L, 20R) comporte à une extrémité un réceptacle (21) pour un caoutchouc d'essieu, par lequel la structure d'essieu respective peut être reliée de manière pivotante à la carrosserie du véhicule, et en ce que la longueur (L1), qui se rapporte à la distance entre le réceptacle (21) et la bride (25), est comprise entre 450 et 600 mm, et/ou
chaque structure d'essieu (20L, 20R) comporte à une extrémité un logement (21) pour un caoutchouc d'essieu, par lequel la structure d'essieu respective peut être reliée de manière pivotante à la carrosserie du véhicule, et la longueur (L2), qui se rapporte à la distance entre l'ouverture (S) de l'entretoise transversale (10) et la bride (25), est comprise entre 250 et 400 mm; et/ou
l'entretoise transversale (10) est conçue comme une poutre en T de dimensions 60x60x7 mm; et/ou
la distance (D2), qui se rapporte à un décalage entre la position du réceptacle (21) pour le caoutchouc de l'essieu et la position de la bride (25), est comprise entre 60 et 110 mm.

7. Utilisation d'une structure d'essieu (100; 100*; 100#) selon l'une des revendications précédentes dans un véhicule automobile.

8. Procédé (2000) de fabrication d'une structure de support d'essieu (100; 100*, 100#) selon l'une quelconque des revendications 1 à 6, **caractérisé par** les étapes suivantes:
(2001): Fabrication d'un premier support d'essieu (20R; 200R) comme support d'essieu droit (20R; 200R) de la structure de support d'essieu (100; 100*, 100#);
(2001): Fabrication d'un deuxième support d'essieu (20L; 200L) en tant que support d'essieu gauche (20L; 200L) de la structure de support d'essieu (100; 100*, 100#); et
(2003): Fixation des deux structures d'essieu (20R, 200R; 20L, 200L) chacune à l'une des extrémités d'une traverse (10*),
la fabrication des structures d'essieu (20R; 200R; 20L; 200L) est effectuée dans chaque cas selon une méthode (1000) de fabrication d'une structure d'essieu unique comprenant les étapes suivantes:
(1001): Découper un ensemble (200) de plusieurs pièces de tôle plates (210-270) dans une tôle, dans lequel l'ensemble (200) comprend au moins deux pièces de tôle (210, 220) qui sont pliées et qui ont chacune au moins trois sections (211-213; 221-224) et une ouverture (S), et dans lequel l'ensemble (200) comprend au moins deux pièces de tôle plates (230, 240) qui ne sont pas pliées;
(1002): Plier les sections (211-213; 221-224) l'une par rapport à l'autre selon des angles compris entre 35° et 90°; et
(1003): Soudage des pièces de tôle pliées et dépliées (210-270) pour former une structure tridimensionnelle conçue comme un support d'essieu (200R).
